# EUROPÄISCHE PATENTANMELDUNG

(11) **EP 1 039 609 A1**
(43) Veröffentlichungstag der Anmeldung: **27.09.2000**
(21) Anmeldenummer: 00104977.4
(22) Anmeldetag: 09.03.2000
(51) Int. Cl.: H02G 5/06

(54) **Stützisolator für hochspannungsführenden Stromleiter einer gasisolierten Leitung**

(30) Priorität: 22.03.1999 DE 19912828
(71) Anmelder: Asea Brown Boveri AG, 5401 Baden (CH)
(72) Erfinder: Vestner, Markus, 8238 Büsingen (CH); Worzyk, Thomas, S370 30 Rödeby (SE); Meinecke, Herbert, 8049 Zürich (CH)
(74) Vertreter: Kaiser, Helmut, Dr.

(57) **Zusammenfassung**

Der Stützisolator dient der Befestigung eines im wesentlichen zylindersymmetrisch ausgebildeten, hochspannungsführenden Stromleiters (4) einer gasisolierten Leitung (1). Er weist einen den Stromleiter (4) auf einem isoliergasgefüllten Kapselungsrohr (3) der Leitung abstützenden Isolierstoffkörper (5) auf. In den Isolierstoffkörper (5) oder in eine in den Isolierstoffkörper (5) eingeformte Steuerelektrode (12) ist eine vom Stromleiter (4) durchdringbare, in Richtung der Zylinderachse (5) des Stromleiters (4) ausgerichtete Öffnung (8) vorgesehen. In den Isolierstoffkörper (5) oder in die Steuerelektrode ist ferner eine von der Öffnung (8) ausgehende Ringnut (9) eingeformt mit in radialer Richtung geführten Seitenwänden. In der Ringnut (9) ist eine Ringfeder (10) angeordnet, welche unter Vergrösserung ihres lichten Durchmessers vorspannbar ist. Beim Aufschieben des Stützisolators (2) auf den Stromleiter (4) während der Montage der Leitung (1) kann der Stützisolator (2) durch Einschnappen der Ringfeder (10) in eine in die Mantelfläche des Stromleiters (4) eingeformte, ringförmige Vertiefung (11) festgesetzt werden.

## Beschreibung

### TECHNISCHES GEBIET

Bei der Erfindung wird ausgegangen von einem Stützisolator für einen im wesentlichen zylindersymmetrisch ausgebildeten, hochspannungsführenden Stromleiter einer gasisolierten Leitung nach Patentanspruch 1.

### STAND DER TECHNIK

Ein solcher Stützisolator ist beispielsweise in EP 0 789 438 A beschrieben. Dieser Stützisolator ist in einem starr ausgebildeten und mit einem Isoliergas, wie vorzugsweise SF₆, gefüllten Druckrohr angeordnet und hält dort einen zylindersymmetrisch ausgeführten, hochspannungsführenden Stromleiter zentral auf der Achse des Druckrohrs. Der Stützisolator weist in axial geführten Nuten des Stromleiters eingepasste Isolierbeine auf, welche sich bei der Montage in den Nuten verklemmen und so den Stromleiter in axialer Richtung festsetzen.

### KURZE DARSTELLUNG DER ERFINDUNG

Der Erfindung, wie sie in Patentanspruch 1 angegeben ist, liegt die Aufgabe zugrunde, einen Stützisolator für einen in Inneren eines Kapselungsrohrs angeordneten Stromleiter einer gasisolierten Leitung zu schaffen, welcher bei der Montage der gasisolierten Leitung mit geringem Aufwand am Stromleiter befestigt werden kann.

Der Stützisolator nach der Erfindung weist mindestens ein Schnappelement auf. Dieses Schnappelement fixiert den Stützisolator - während er bei der Montage auf den Stromleiter aufgeschoben wird - an vorbestimmten Stellen im Inneren der gasisolierten Leitung. Diese Fixierung wird in besonders sicherer Weise durch Ausbildung des Schnappelementes als vorspannbare Ringfeder und durch Führung der Ringfeder in einer zur Mantelfläche des Stromleiters hin geöffneten Ringnut des Stützisolators erreicht. Es kann dann beim Aufschieben die vorgespannte Ringfeder in eine in die Mantelfläche des Stromleiters eingeformte, ringförmige Vertiefung eingeschnappt und so der Stützisolator festgesetzt werden. Da hierbei die Ringfeder in radialer Richtung verschoben wird, werden fertigungtechnisch bedingte Abweichungen des Stützisolators und/oder des Stromleiters von dessen Sollabmessungen, insbesondere im seinem auf dem Stromleiter aufliegenden Innendurchmesserbereich, problemlos kompensiert.

Die Ringnut kann direkt in den Isolierstoffkörper eingeformt werden. Bei einem Stützisolator mit einer am Stromleiter anliegenden Steuerelektrode wird sie vorteilhafterweise direkt in die Elektrode eingeformt und die Ringfeder zugleich aus einem elektrisch leitenden Material gefertigt. Es sind dann in besonders einfacher und sicherer Weise Stützisolator und Stromleiter miteinander elektrisch kontaktiert.

Zweckmässigerweise ist neben der Ringnut noch eine weitere ebenfalls eine Ringfeder aus elektrisch leitendem Material aufnehmende Ringnut vorgesehen und sind diese beiden Ringnuten an axial voneinander beabstandeten Enden in die Steuerelektrode eingeformt. Es können dann die zum Isoliergas hin offenliegenden Grenzflächen von Isoliermaterial des Stützisolators und Steuerelektrode (Tripelpunkte) dielektrisch wirkungsvoll entlastet werden.

Die Ringfeder ist im allgemeinen als in Umfangsrichtung gewickelte Spiralfeder oder als Ring aus elastisch verformbarem Kunststoff ausgebildet. Wird als Kunststoff ein elastomeres Polymer verwendet, so wirkt die Ringfeder als Dämpfungselement und können so in der gasisolierten Leitung auftretende Schwingungen wirkungsvoll gedämpft werden.

### KURZE BESCHREIBUNG DER ZEICHNUNGEN

Bevorzugte Ausführungsbeispiele des Stützisolators nach der Erfindung und die damit erzielbaren weiteren Vorteile werden nachfolgend anhand von Zeichnungen näher erläutert. Hierbei zeigt:
- Fig.1: eine Aufsicht auf einen Teil eines in Richtung der Achse einer rohrförmig ausgebildeten, gasisolierten Hochspannungsleitung geschnittenen Stützisolators nach der Erfindung beim Aufschieben auf einen Stromleiter der Leitung,
- Fig.2: den Stützisolator gemäss Fig.1 nach dem Festsetzen auf dem Stromleiter,
- Fig.3: eine Aufsicht auf einen Teil eines in Richtung der Achse der rohrförmig ausgebildeten, gasisolierten Hochspannungsleitung geschnittenen weiteren Stützisolators nach der Erfindung beim Aufschieben auf den Stromleiter, und
- Fig.4: den Stützisolator gemäss Fig.3 nach dem Festsetzen auf dem Stromleiter,

### WEGE ZUR AUSFÜHRUNG DER ERFINDUNG

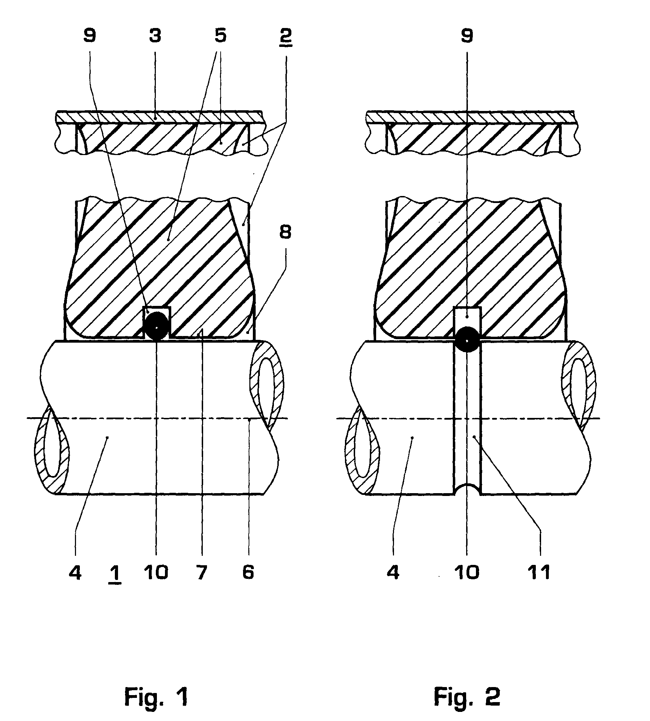

In allen Figuren beziehen sich gleiche Bezugszeichen auf gleichwirkende Teile. Eine in Fig.1 dargestellte und mit dem Bezugszeichen 1 gekennzeichnete gasisolierte Leitung weist einen auf einem Stützisolator 2 in einem weitgehend starren Kapselungsrohr 3 zentral geführten und hohl ausgebildeten, zylinderförmigen Stromleiter 4 auf, welcher sich auf Mittel- oder Hochspannungspotential (mehrere kV bis zu mehrere Hundert kV) befindet. Das Kapselungsrohr ist mit einem Isoliergas, wie etwa SF₆, mit bis zu einigen bar Druck gefüllt und besteht aus einem leitfähigen oder mit einer leitfähigen Schicht versehenen Kunststoff, wie etwa Polyäthylen oder Polypropylen, kann aber auch von einem Metall, wie etwa Aluminium oder Stahl, gebildet sein. Das Isoliergas kann als Kühlmittel durch das Rohr 3 zirkulieren, gegebenenfalls aber auch durch den Stromleiter 4.

Der Stützisolator 2 weist einen von einem Isolierstoff, etwa einem füllstoffgefüllten Giessharz, beispielsweise auf der Basis eines Epoxids, oder einem Thermoplast, etwa auf der Basis von Polyäthylen oder Polypropylen, gebildeten Isolierstoffkörper 5 auf. Im Isolierstoffkörper 5 ist eine vom Stromleiter 4 durchdrungene, in Richtung der Zylinderachse 6 des Stromleiters 4 ausgerichtete und von einer zylinderförmigen Innenfläche 7 des Isolierstoffkörpers begrenzte Öffnung 8 vorgesehen. In den Isolierstoffkörper 5 ist ferner eine in die Innenfläche 7 mündende Ringnut 9 eingeformt mit in radialer Richtung geführten Seitenwänden. In der Ringnut 9 befindet sich eine Ringfeder 10. Diese Ringfeder 10 ist vorzugsweise als im Umfangsrichtung gewickelte Spiralfeder oder als Ring aus elastisch verformbarem Kunststoff ausgeführt und weist im Ruhezustand einen lichten Durchmesser auf, der kleiner ist als der Aussendurchmesser des Stromleiters 4.

Bei der Montage wird der Stützisolator 2 auf den Stromleiter 4 aufgeschoben. Hierbei wird die Ringfeder 10 elastisch deformiert und unter Vergrösserung ihres lichten Durchmessers vorgespannt, wie dies aus Fig.1 ersichtlich ist. Die Ringfeder 10 ist dann überwiegend in der Ringnut 9 angeordnet. Der Stützisolator 2 wird nun solange entlang dem Stromleiter 4 in die Kapselung 3 eingeschoben, bis die Ringnut 9 mit einer in die Mantelfläche des Stromleiters 4 eingeformten, ringförmigen Vertiefung 11 fluchtet (Fig.2). Die Ringfeder 10 entspannt sich nun unter Verkleinerung ihres lichten Durchmessers und wird mit ihrem den lichten Durchmesser bildenden Teil in die Vertiefung 11 geführt. Der äussere Teil der Ringfeder 10 befindet sich weiterhin in der Ringnut 9. Durch Einschnappen der Ringfeder 10 in die Vertiefung 11 wird der Stützisolator 2 auf dem Stromleiter 4 festgesetzt und jede weitere Bewegung in axialer Richtung blockiert.

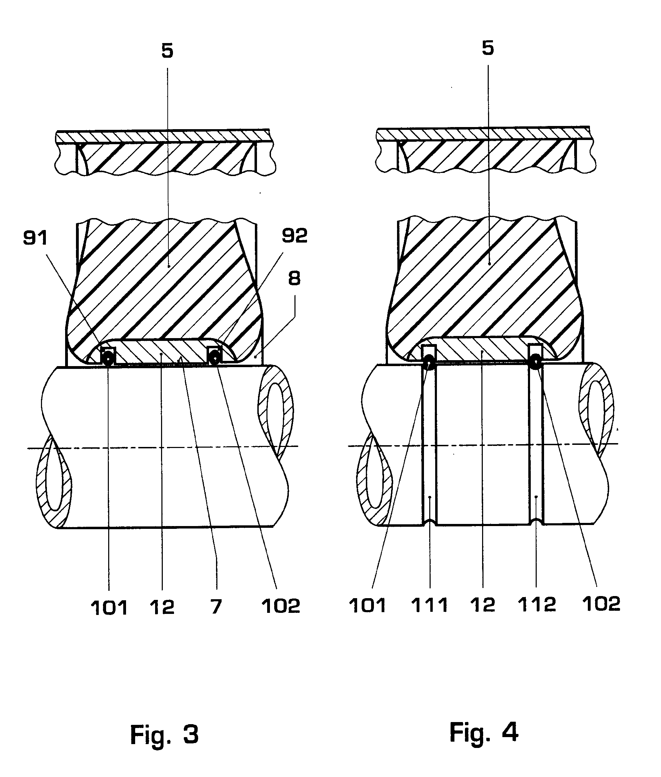

Bei der Ausführungsform gemäss den Figuren 3 und 4 ist in den Isolierstoffkörper 5 eine die Öffnung 8 begrenzende, ringförmig ausgebildete Steuerelektrode 12 eingeformt. Die Steuerelektrode 12 besteht aus Metall, wie etwa Kupfer oder Aluminium, oder aus einem elektrisch leitfähigen Kunststoff, wie etwa einem mit einem elektrisch gut leitfähigen Pulver, beispielsweise Russ, gefüllten Polymer auf der Basis eines Epoxids. Das Einformen wird im allgemeinen durch ein Giessverfahren erreicht. Im Unterschied zu den Ausführungsform nach den Figuren 1 und 2 sind statt einer Ringnut 9 nun zwei Ringnuten 91 und 92 vorgesehen. In diesen beiden Ringnuten ist jeweils eine von zwei Ringfedern 101, 102 angeordnet. Die Nuten 91, 92 sind an den in axialer Richtung voneinander beabstandeten Enden der Steuerelektrode 12 eingeformt. Beide Ringfedern 101, 102 sind aus elektrisch leitendem Material gebildet.

Schnappen beim Aufschieben des Stützisolators 2 die beiden Ringfedern 101, 102 in zwei auf der Mantelfläche des Stromleiters 4 angebrachten, ringförmigen Vertiefungen 111, 112 ein, so wird der Stützisolator 2 festgesetzt. Da die beiden Ringfedern 101 und 102 nicht nur elektrisch leitend ausgebildet sind, sondern sich zugleich auch an den Enden der Steuerelektrode 12 befinden, werden die zum Isoliergas hin offenliegenden, gemeinsamen Grenzlinien von Isolierstoffkörper 5 und von Steuerelektrode 12 (Tripelpunkte) dielektrisch entlastet.

Die Ringfeder 10 bzw. jede der beiden Ringfedern 101 und 102 wird im allgemeinen von einer in Umfangsrichtung gewickelten Spiralfeder oder von einem Ring aus elastisch verformbarem Kunststoff gebildet. Wird als Kunststoff für den Ring ein elastomeres Polymer verwendet, so wirkt die Ringfeder als Dämpfungselement und können so in der gasisolierten Leitung auftretende Schwingungen wirkungsvoll gedämpft werden.

### Bezugszeichenliste

- 1: gasisolierte Leitung
- 2: Stützisolator
- 3: Kapselungsrohr
- 4: Stromleiter
- 5: Isolierstoffkörper
- 6: Zylinderachse
- 7: Innenfläche
- 8: Öffnung
- 9, 91, 92: Ringnuten
- 10, 101, 102: Ringfedern
- 11, 111, 112: Vertiefungen
- 12: Steuerelektrode

## Patentansprüche

1. Stützisolator zum Abstützen eines im wesentlichen zylindersymmetrisch ausgebildeten, hochspannungsführenden Stromleiters (4) in einem isoliergasgefüllten Kapselungsrohr (3) einer gasisolierten Leitung (1), in dem eine vom Stromleiter (4) durchdringbare, in Richtung der Zylinderachse (6) des Stromleiters (4) ausgerichtete und von einer zylindermantelförmigen Innenfläche (7) des Stützisolators begrenzte Öffnung (8) vorgesehen ist, dadurch gekennzeichnet, dass in den Stützisolator eine in die Innenfläche (7) mündende erste Ringnut (9, 91) eingeformt ist mit in radialer Richtung geführten Seitenwänden, und dass in der ersten Ringnut (9, 91) eine erste Ringfeder (10, 101) angeordnet ist, die unter Vergrösserung ihres Durchmessers vorspannbar und unter Festsetzung des Stützisolators (2) in eine in die Mantelfläche des Stromleiters (4) eingeformte, ringförmige Vertiefung (11, 111) einschnappbar ist.

2. Stützisolator nach Anspruch 1 mit einer in einen Isolierstoffkörper (5) des Stützisolators eingeformten und die Öffnung (8) zumindest teilweise begrenzenden, ringförmig ausgebildeten Steuerelektrode (12), dadurch gekennzeichnet, dass die erste Ringnut (91) in die Steuerelektrode (12) eingeformt ist, und dass die Ringfeder (101) aus elektrisch leitendem Material besteht.

3. Stützisolator nach Anspruch 2, dadurch gekennzeichnet, dass die erste (91) und eine der Aufnahme einer zweiten Ringfeder (102) dienende zweite Ringnut (92) in axial voneinander beabstandete Enden der Steuerelektrode (12) eingeformt sind.

4. Stützisolator nach einem der Ansprüche 1 bis 3, dadurch gekennzeichnet, dass die erste (10, 101) und/oder die zweite Ringfeder (102) als in Umfangsrichtung gewickelte Spiralfeder oder als Ring aus elastisch verformbarem Kunststoff ausgebildet sind.

5. Stützisolator nach Anspruch 4, dadurch gekennzeichnet, dass die erste und/oder die zweite Ringfeder (10, 101, 102) elektrisch leitfähig ausgebildet sind.

6. Stützisolator nach einem der Ansprüche 1 bis 5, dadurch gekennzeichnet, dass die erste und/oder die zweite Ringfeder (10, 101, 102) jeweils als Dämpfungselement ausgebildet sind.

7. Stützisolator nach Anspruch 6, dadurch gekennzeichnet, dass die erste und/oder die zweite Ringfeder (10, 101, 102) jeweils aus einem elastomeren Polymer gebildet sind.
